# EUROPEAN PATENT SPECIFICATION

(11) **EP 1 705 311 B1**
(45) Date of publication and mention of the grant of the patent: **05.03.2008**
(21) Application number: 04791389.2
(22) Date of filing: 27.10.2004
(51) Int. Cl.: E04F 15/12

(54) **ANTI-SLIP COMPOSITION FOR APPLICATION TO CERAMIC TILES**
RUTSCHHEMMENDE REZEPTUR ZUM AUFTRAGEN AUF KERAMISCHE FLIESEN
COMPOSITION ANTIDERAPANTE POUR APPLICATION SUR DES CARREAUX EN CERAMIQUE

(30) Priority: 26.11.2003 ES 200302777
(43) Date of publication of application: 27.09.2006
(73) Proprietor: Torrecid S.A., 12110 Alcora (ES)
(72) Inventor: CORTS RIPOLL, Juan Vicente, E-12110 ALCORA , CASTELLON (ES); FERRANDO CATALA, Vicente, E-12110 ALCORA, CASTELLON (ES); BREVA ANDREU, Jose, Miguel, E-12110 ALCORA, CASTELLON (ES); SANMIGUEL ROCHE, Francisco, E-12110 ALCORA, CASTELLON (ES)
(74) Representative: Isern-Jara, Nuria
(86) International application number: PCT/ES2004/000470
(87) International publication number: WO 2005/052280

(56) References cited:
- US-A- 5 190 708
- US-B1- 6 599 461

## Description

### OBJECT OF THE INVENTION

The object of this invention is an anti-slip composition for application to ceramic tiles, that incorporates significant innovations and advantages compared to the products used for the same purpose.

More specifically, it makes reference to an anti-slip composition that can be applied to tiles that comprise of a mixture of a liquid medium and refractory materials for the purpose of producing highly adhesive ceramic tiles.

### BACKGROUND TO THE INVENTION

At the present time the problem of slipping on ceramic tiled floors is well known. However there are differing solutions for the purpose of solving these types of problems.

For example, in the patent CN1332302 a floor is described with anti-slip properties based on the application of glass spheres onto glass sheets and a thermal treatment in order to fix said spheres to the glass surface, in this way providing it with sufficient roughness to prevent slipping.

On the other hand, the European Patent N° EP1264035 makes reference to an anti-slip surface coating for floors that is made up from a PVC material base structure to which heat is applied, this means, at a temperature below 250°C, some particles adhere giving the anti-slip property.

Equally, in the Japanese Patent N° 2001098253 an agent is described that prevents slipping and which is made up from silicones, epoxy resins, sulphuric acid, catalysts, etc., and when applied onto certain surfaces reduces the risk of sliding.

However, the application of the previously stated processes to ceramic does not give satisfactory results, basically due to the fact that the firing of the materials takes place at temperatures in excess of 1,000°C.

On the other hand, in the American Patent N° US6167879 a method is described according to which, by means of pulses from a laser beam onto the ceramic tile surface micro-craters are produced thus providing anti-slip properties. However, this procedure that can equally be applied to other types of materials such as stones has the disadvantage of it has to be carried out in appropriate installations, independent of the ceramic tile manufacturing process. This fact involves a cost increase and greater production difficulty. In addition the stated micro-craters affect the surface appearance of the material, which makes a disadvantage for its subsequent marketing.

Another method of providing the anti-slip property for ceramic tiles consists of treating the surface of same by means of solutions of fluoro-hydric acid once they have been laid on site at the works. The Patents GB1117221, US 5698021 and US 5885339 make reference to this type of procedure that, in addition to being a process independent of the manufacturing process usually produces changes to the tone and appearance of the tile surface.

In regard to the obtaining of ceramic paving that has anti-slip properties without the need to resort to processes that are additional to the manufacturing process itself, at the present time there is no known solution. The most usual process in the paving and ceramic tile industries consist of applying grains with a granulometric coarseness (200-1000µm) that after the firing process of the piece, small hard mounds remain on the surface that provides the anti-slip property. Such mounds provide a roughness in the order of hundredths of microns. This effect is usually combined with the use of geometric relieves on the surface of the pieces, that bring about peaks and troughs that increase the anti-slip effect. This type of product has a very limited market owing to the fact that the ceramic tile paving thus obtained is excessively rough and coarse to the touch, even being able to cause cuts to the skin of the user if the surface is walked on barefoot. Moreover, they are limited from the point of view of design as it is not possible to develop any type of model and follow the market trends at any one time.

Also, it is know from US-A-5 190 708 a method for the realization of the ceramic tile, glazed or enamelled which involves the making of a crude ceramic tile from a clay material. However, it is not achieved an optimal solution which accomplishes esthetical finish and cleaning action properly.

### DESCRIPTION OF THE INVENTION

This present invention has been developed for the purpose of providing an anti-slip composition applicable to ceramic tiles, that solves the above stated disadvantages, in addition, providing other additional advantages that will be evident from the description that is included below.

The anti-slip composition applicable to ceramic tiles object of the present invention is of the type that comprises a homogeneous mixture of a liquid medium and refractory materials, is characterised in that the liquid medium comprises a mixture of one or more components selected from among alcohols, hydrocarbons, water, glycols, esters, ethers, ketones, petroleum distillate fractions and natural oils; and the refractory materials comprise a mixture of one or more materials selected from among clay, kaolins, silicates, aluminium coated materials, magnesium oxides and hydroxides, calcium, strontium, barium, wolfram, zinc, aluminium, silicon, tin and antimony, consisting the refractory materials used of a mixture of colloidal silicon oxide and aluminium hydroxide. This mixture guarantee a good mixture between refractory materials and liquid medium.

Thanks to these characteristics anti-slip composition is obtained which can be suitably applied during the production of anti-slip tiles, thereby producing a smooth, pleasant to touch surface. In addition, said tiles are suitable for all types of decoration in order to follow market trends. On the other hand, thanks to the chemical composition of the anti-slip product of the present invention, a perfect bonding is achieved with the rest of the components that make up a ceramic tile, in such a way that the micro-roughness obtained is capable of withstanding the standard abrasion trials used prior to the marketing of the tiles. The product can be applied by means of known techniques such as, for example, by spray gun, disc, silk screen and similar processes.

On the other hand, in order to achieve an optimal dispersion of the previously stated refractory materials in the liquid medium and prevent the sedimentation the additional use of differing dispersion agents is necessary, e.g. silicone derivatives, fatty acid derivatives, poly acrylates, polyurethanes, polycarboxylic polymers, copolymers in block, etc. tension-actives, anti-foaming agents.

By preference, the colloidal silicon oxide is in a percentage by weight of between 0 and 50%. More preferably, said colloidal silicon oxide is in a percentage by weight of between 0.1 and 15%, preferably in a percentage by weight of between 0.2 and 8%.

In accordance with another aspect of the invention, the aluminium hydroxide is in a percentage by weight of between 0.2 and 50%. Preferably the aluminium hydroxide is in a percentage by weight of between 0,5 and 15%, and more preferably, in a percentage by weight of between 2 and 8%.

Preferably the content in solid is in a percentage of between 0.5 and 50%. More preferably, it is in a percentage of between 1.5 and 20%, preferably in a percentage of between 2 and 15%.

In accordance with another characteristic of the anti-slip composition of the invention, the solid particle size is less than 5µm, even being less than 1µm, a size that is considerably less than that usually used in the differing types of enamels and raw materials used in the paving a ceramic coating industry that, as is well known, is usually less than 45µm and in the more extreme of cases of some raw materials less than 8µm.

Preferably the anti-slip composition has a specific surface raised from 50 to 200 m²/g. More preferably, it has a specific surface of 70 to 150 m²/g.

Advantageously, a tile which incorporates said anti-slip composition has a static friction coefficient in wet conditions in excess of 0.7.

Other characteristics and advantages of the product applicable to tiles, a method of producing same and a tile from the product object of the present invention will become clear from the description of some preferred embodiments, but not exclusive and are by way of being illustration and not limiting.

### DESCRIPTION OF A PREFERRED EMBODIMENT

### Example 1.

This example makes reference to a series of compositions and a preparation of the anti-slip composition described in Claim 1.

The following table shows the different compositions (A-H) used in the obtaining of the anti-slip product, likewise the particle size and specific surface obtained after grinding in a micro-ball mill.

| Compositions | A | B | C | D | E | F | G | H |
|---|---|---|---|---|---|---|---|---|
| Colloidal oxide of Zn | | 18% | | | | | | 9% |
| Colloidal oxide of Al | | 22% | | | | | | 11% |
| Hydroxide of Al | | | 9% | 7% | 11% | 9% | 9% | |
| Clays | 20% | | | | | | | |
| Kaolin | 15% | | | | | | | |
| Colloidal Silicon oxide | | | 6% | 8% | 4% | 6% | 6% | |
| Colloidal Titanium oxide | 5% | | | | | | | |
| Zirconium Silicate | 10% | | | | | | | |
| Additives, dispersants, anti-sedimentation agents, stabilisers, etc | 0.8% | 0.5% | 0.7% | 0.7% | 0.7% | 0.7% | 0.7% | 0.4% |
| Water | 49.2% | 55.5% | 84.3% | 84.3% | 84.3% | 84.3% | 84.3% | 79.6% |
| D50 (µm) | 1.5 | 0.9 | 0.6 | 0.6 | 0.6 | 0.6 | 0.6 | 0.9 |
| Specific surface (m²/g) | 80 | 98 | 150 | 150 | 150 | 60 | 40 | 90 |

### Example 2

Next, in the following example reference is made to ceramic tiles in which an earthenware porcelain ceramic paste has been used of a known type and enamelled with an equally known type that provides matt surfaces in which 90 /m² of the compositions A, B and C from the table corresponding to example 1 above have been applied by means of a spray gun. In all cases a static coefficient of friction (COF) greater than 0.7 was obtained.

### Example 3

In this example reference is made to ceramic tiles in which an earthenware porcelain ceramic paste has been used of a known type and enamelled with an equally known type that provides matt surfaces, onto which different amounts of composition C have been applied by means of a spray gun.

Once again the pieces were fired using the firing cycle normally used in the industry and whose maximum temperature was 1,200°C, the static coefficient of friction (COF) and roughness was determined. The results that were obtained are shown below in the following table, in which it can be seen that the COF exceeds a value of 0.7 and a micro roughness was generated with the application of composition E. As can be seen from the micro roughness values (<20µm), it is not possible to detect it to the touch.

| Composition C | | | | |
|---|---|---|---|---|
| g/m² | 0 | 35 | 50 | 75 |
| COF | 0.48 | 0.73 | 0.78 | 0.85 |
| Ra(µm) | 1.01 | 4.52 | 8.3 | 11.45 |

### Example 4

The earthenware ceramic tiles onto which a known porcelain ceramic paste was used and enamelled with an equally known enamel that provided matt surfaces, applying 75 g/m² of compositions C, D and E from the table in example 1 using a spray gun. Once having fired the pieces using a firing cycle that is normally used in the industry at a maximum temperature of 1,200°C, it was seen that, with composition C the results were satisfactory, with composition D the COF value did not achieve a value in excess of 0.7 and that with composition E the bonding of the enamel was not adequate, giving rise to fissures, chipping, etc., making the importance of the product's formula clear.

### Example 5

This example makes reference to ceramic tiles in which a known red earthenware paste was used and enamelled with different base and decorative enamels also being of known types, onto these applying 65 g/m² of compositions C, F, G and H from the table in example 1 using a spray gun. Once having fired the pieces using a firing cycle that is normally used in the industry at a maximum temperature of 1,150°C, the static coefficient of friction was measured. The results obtained are shown in the following table:

| | Composition C | Composition F | Composition G | Composition H |
|---|---|---|---|---|
| COF | 0.81 | 0.65 | 0.58 | 0.75 |

From the table it can be seen that, in line with the specific surface used, the COF varied.

### Example 6

In this example 65g/m² of composition C was used on different types of ceramic tiles, being:
- Porcelain earthenware without enamel and decorated with soluble salts.
- Porcelain earthenware decorated in the press by means of the double load technique.
- Porcelain earthenware enamelled with an enamel that provides semi-gloss and decorated surfaces by means of the photogravure technique.
- Red earthenware paste enamelled with an enamel that provides matt surfaces and decorated by silk screening means.
- Red earthenware paste enamelled with an enamel that provides semi-gloss surfaces and decorated by silk screening means and protected by means of applying grains.

In all cases satisfactory results were obtained that exceed the 0.7 COF value.

The details, shapes, sizes and other accessorial elements, likewise the materials used for the manufacture of the anti-slip composition applicable to ceramic tiles, of the invention can suitably be substituted for others that are technically equivalent and do not deviate from the essentials of the invention, the scope of which is defined by the claims which are included below.

## Claims

1. Anti-slip composition applicable to ceramic tiles that is of the type that comprises a homogeneous mixture of a liquid medium and refractory materials, **characterised in that** the liquid medium comprises a mixture of one or more components selected from among alcohols, hydrocarbons, water, glycols, esters, ethers, ketones, petroleum distillate fractions and natural oils; and the refractory materials comprise a mixture of one or more materials selected from among clay, kaolins, silicates, aluminium coated materials, magnesium oxides and hydroxides, calcium, strontium, barium, wolfram, zinc, aluminium, silicon, tin and antimony and wherein the refractory materials consist of a mixture of a colloidal silicon oxide and aluminium hydroxide.

2. Anti-slip composition applicable to ceramic tiles according to claim 1, **characterised in that** the colloidal silicon oxide is in a percentage by weight of between 0 and 50%.

3. Anti-slip composition applicable to ceramic tiles according to claim 1, **characterised in that** the colloidal silicon oxide is in a percentage by weight of between 0.1 and 15%.

4. Anti-slip composition applicable to ceramic tiles according to claim 1, **characterised in that** the colloidal silicon oxide is in a percentage by weight of between 0.2 and 8%.

5. Anti-slip composition applicable to ceramic tiles according to claim 1, **characterised in that** the aluminium hydroxide is in a percentage by weight of between 0.2 and 50%.

6. Anti-slip composition applicable to ceramic tiles according to claim 1, **characterised in that** the aluminium hydroxide is in a percentage by weight of between 0.5 and 15%.

7. Anti-slip composition applicable to ceramic tiles according to claim 1, **characterised in that** the aluminium hydroxide is in a percentage by weight of between 2 and 8%.

8. Anti-slip composition applicable to ceramic tiles according to claims 1 to 6, **characterised in that** the content in solid is in a percentage of between 0.5 and 50%.

9. Anti-slip composition applicable to ceramic tiles according to claims 1 to 6, **characterised in that** the content in solid is in a percentage of between 1.5 and 20%.

10. Anti-slip composition applicable to ceramic tiles according to claims 1 to 6, **characterised in that** the content in solid is in a percentage of between 2 and 15%.

11. Anti-slip composition applicable to ceramic tiles according to claims 1 to 6, **characterised in that** the solid particle size is less than 5µm, preferably less than 1µm.

12. Anti-slip composition applicable to ceramic tiles according to claims 1 to 6, **characterised in that** it has a specific surface of 50 to 200 m²/g.

13. Anti-slip composition applicable to ceramic tiles according to claims 1 to 6, **characterised in that** it has a specific surface of 70 to 150 m²/g.

## Patentansprüche

1. Antirutschsystem zur Anwendung auf Keramikfliesen der Art, das aus einer homogenen Mischung aus einer Flüssigkeit und hitzebeständigen Materialien besteht, **dadurch gekennzeichnet, dass** die Flüssigkeit aus einer Mischung aus einem oder mehreren der nachstehend genannten Bestandteile gebildet wird: Alkohole, Kohlenwasserstoffe, Wasser, Glykole, Esther, Ether, Ketone, Fraktionen von Erdöldestilaten und natürlichen Ölen; und dass die hitzebeständigen Materialien aus einer Mischung aus einem oder mehreren der folgenden Materialien gebildet werden: Ton, kaolin, Silikate, aluminiumbeschichtete Materialien, Magnesium-, Kalzium- Strontium-, Barium-, Wolfram-, Zink-, Aluminium-, Silizium-, Zinn- und Antimoniumoxide und - hydroxide; wobei die hitzebeständigen Materialien aus einer Mischung aus kolloidalem Siliziumoxid und Aluminiumhydroxid bestehen.

2. Antirutschsystem zur Anwendung auf Keramikfliesen nach Anspruch 1, **dadurch gekennzeichnet, dass** der Anteil an kolloidalem Siliziumoxid zwischen 0 und 50 Gewichtsprozent beträgt.

3. Antirutschsystem zur Anwendung auf Keramikfliesen nach Anspruch 1, **dadurch gekennzeichnet, dass** der Anteil an kolloidalem Siliziumoxid zwischen 0,1 und 15 Gewichtsprozent beträgt.

4. Antirutschsystem zur Anwendung auf Keramikfliesen nach Anspruch 1, **dadurch gekennzeichnet, dass** der Anteil an kolloidalem Siliziumoxid zwischen 0,2 und 8 Gewichtsprozent beträgt.

5. Antirutschsystem zur Anwendung auf Keramikfliesen nach Anspruch 1, **dadurch gekennzeichnet, dass** der Anteil an Aluminiumhydroxid zwischen 0,2 und 50 Gewichtsprozent beträgt.

6. Antirutschsystem zur Anwendung auf Keramikfliesen nach Anspruch 1, **dadurch gekennzeichnet, dass** der Anteil an Aluminiumhydroxid zwischen 0,5 und 15 Gewichtsprozent beträgt.

7. Antirutschsystem zur Anwendung auf Keramikfliesen nach Anspruch 1, **dadurch gekennzeichnet, dass** der Anteil an Aluminiumhydroxid zwischen 2 und 8 Gewichtsprozent beträgt.

8. Antirutschsystem zur Anwendung auf Keramikfliesen nach einem der Ansprüche 1 bis 6, **dadurch gekennzeichnet, dass** der Anteil an Feststoffen zwischen 0,5 und 50 % beträgt.

9. Antirutschsystem zur Anwendung auf Keramikfliesen nach einem der Ansprüche 1 bis 6, **dadurch gekennzeichnet, dass** der Anteil an Feststoffen zwischen 1,5 und 20 % beträgt.

10. Antirutschsystem zur Anwendung auf Keramikfliesen nach einem der Ansprüche 1 bis 6, **dadurch gekennzeichnet, dass** der Anteil an Feststoffen zwischen 2 und 15 % beträgt.

11. Antirutschsystem zur Anwendung auf Keramikfliesen nach einem der Ansprüche 1 bis 6, **dadurch gekennzeichnet, dass** die Größe der Feststoffteilchen geringer als 5 µm, vorzugsweise geringer als 1 µm ist.

12. Antirutschsystem zur Anwendung auf Keramikfliesen nach einem der Ansprüche 1 bis 6, **dadurch gekennzeichnet, dass** es eine spezifische Oberfläche von 50 bis 200 m²/g aufweist.

13. Antirutschsystem zur Anwendung auf Keramikfliesen nach einem der Ansprüche 1 bis 6, **dadurch gekennzeichnet, dass** es eine spezifische Oberfläche von 70 bis 150 m²/g aufweist.

## Revendications

1. Composé antidérapant applicable à des carreaux céramiques du type comprenant un mélange homogène d'un milieu liquide et de matériaux réfractaires, **caractérisé en ce que** le milieu liquide comprend un mélange d'un ou plusieurs composants choisis parmi les alcools, les hydrocarbures, l'eau, les glycols, les esters, les éthers, les cétones, les fractions de distillats du pétrole et les huiles naturelles; **en ce que** les matériaux réfractaires consistent en un mélange d'un ou plusieurs matériaux sélectionnés parmi l'argile, les kaolins, les silicates, les matériaux recouverts d'aluminium, les oxydes et les hydroxydes de magnésium, de calcium, de strontium, de baryum, de wolfram, de zinc, d'aluminium, de silicium, d'étain et d'antimoine; et **en ce que** les matériaux réfractaires consistent en un mélange d'oxyde de silicium colloïdal et d'hydroxyde d'aluminium.

2. Composé antidérapant applicable à des carreaux céramiques, selon la revendication 1, **caractérisé en ce que** le pourcentage en poids de l'oxyde de silicium colloïdal se situe entre 0 et 50 %.

3. Composé antidérapant applicable à des carreaux céramiques, selon la revendication 1, **caractérisé en ce que** le pourcentage en poids de l'oxyde de silicium colloïdal se situe entre 0,1 et 15 %.

4. Composé antidérapant applicable à des carreaux céramiques, selon la revendication 1, **caractérisé en ce que** le pourcentage en poids de l'oxyde de silicium colloïdal se situe entre 0,2 et 8 %.

5. Composé antidérapant applicable à des carreaux céramiques, selon la revendication 1, **caractérisé en ce que** le pourcentage en poids de l'hydroxyde d'aluminium se situe entre 0,2 et 50 %.

6. Composé antidérapant applicable à des carreaux céramiques, selon la revendication 1, **caractérisé en ce que** le pourcentage en poids de l'hydroxyde d'aluminium se situe entre 0,5 et 15 %.

7. Composé antidérapant applicable à des carreaux céramiques, selon la revendication 1, **caractérisé en ce que** le pourcentage en poids de l'hydroxyde d'aluminium se situe entre 2 et 8 %.

8. Composé antidérapant applicable à des carreaux céramiques, selon les revendications 1 à 6, **caractérisé en ce que** le pourcentage du contenu en solides se situe entre 0,5 et 50 %.

9. Composé antidérapant applicable à des carreaux céramiques, selon les revendications 1 à 6, **caractérisé en ce que** le pourcentage du contenu en solides se situe entre 1,5 et 20 %.

10. Composé antidérapant applicable à des carreaux céramiques, selon les revendications 1 à 6, **caractérisé en ce que** le pourcentage du contenu en solides se situe entre 2 et 15 %.

11. Composé antidérapant applicable à des carreaux céramiques, selon les revendications 1 à 6, **caractérisé en ce que** la taille des particules solides est inférieure à 5 µm et préférentiellement inférieure à 1 µm.

12. Composé antidérapant applicable à des carreaux céramiques, selon les revendications 1 à 6, **caractérisé en ce qu'**il présente une superficie spécifique de 50 à 200 m²/g.

13. Composé antidérapant applicable à des carreaux céramiques, selon les revendications 1 à 6, **caractérisé en ce qu'**il présente une superficie spécifique de 70 à 150 m²/g.
